(19) Europäisches Patentamt
European Patent Office
Office européen des brevets

(11) Veröffentlichungsnummer : **0 490 814 A1**

# (12) EUROPÄISCHE PATENTANMELDUNG

(21) Anmeldenummer : **91810938.0**

(51) Int. Cl.$^5$ : **C09B 67/42**

(22) Anmeldetag : **03.12.91**

(30) Priorität : **11.12.90 CH 3904/90**

(43) Veröffentlichungstag der Anmeldung :
**17.06.92 Patentblatt 92/25**

(84) Benannte Vertragsstaaten :
**BE CH DE ES FR GB IT LI**

(71) Anmelder : **CIBA-GEIGY AG**
**Klybeckstrasse 141**
**CH-4002 Basel (CH)**

(72) Erfinder : **Traber, Rainer Hans, Dr.**
**Im Stockacker 26**
**CH-4153 Reinach (CH)**
Erfinder : **Strahm, Ulrich, Dr.**
**Schartenflueweg 49**
**CH-4147 Aesch (CH)**

## (54) Pastöse bis feste Farbstoff-Schmelzen.

(57) Beschrieben werden neue pastöse bis feste Farbstoff-Schmelzen, dadurch gekennzeichnet, dass sie auf 1 Teil eines in Wasser schwer bis unlöslichen Farbstoffes, dessen Schmelzpunkt über 150°C liegt, 2 bis weniger als 5 Teile eines nichtionischen Tensides mit einem Schmelzpunkt von 25° bis 100°C und einem HLB-Wert von 13 bis 19 oder eines kationischen Tensides mit einem Schmelzpunkt von 25 bis 100°C oder Mischungen der genannten Tenside enthalten sowie Verfahren zu deren Herstellung und Verwendung zum Färben und Bedrucken von vor allem Polyestermaterialien, wobei egale Ausfärbungen mit hohem Ausziehgrad erhalten werden.

EP 0 490 814 A1

Die Erfindung betrifft pastöse bis feste Farbstoff-Schmelzen, ein Verfahren zu deren Herstellung sowie deren Verwendung zum Färben und Bedrucken von Textilmaterial, vor allem hydrophobes Fasermaterial.

Hydrophobes Fasermaterial, in erster Linie Polyestergarne oder auch Gewebe oder Gewirke aus Polyesterfasern, werden mit Dispersionsfarbstoffen entweder unter Normaldruck, bei Temperaturen bis zu 100°C in Gegenwart eines Carriers oder in einem geschlossenen Färbeapparat bei Temperaturen von 120 bis 150°C unter Druck gefärbt. Beide Verfahren haben den Nachteil, dass zu ihrer Durchführung Dispersionsfarbstoffe benötigt werden, die in einer möglichst feinteiligen, stabil dispergierten Form vorliegen. Demzufolge müssen die Farbstoffe nach der Synthese langwierigen Mahloperationen unterworfen werden, beispielsweise in Rührwerks-Kugelmühlen oder Sandmühlen, zusammen mit geeigneten Dispergiermitteln. Schliesslich muss der heruntergemahlene Dispersionsfarbstoff in eine stabile, nicht zur Reagglomeration neigende, lagerfähige Flüssigformulierung überführt oder einem schonenden Trocknungsverfahren unterworfen werden, damit ein Farbstoffpulver erhalten wird, das in der Färbeflotte ohne Klumpenbildung rasch dispergierbar ist. Weiterhin bereitete es Schwierigkeiten Farbstoff-Präparate zu entwickeln, welche Farbstoffe mit einem relativ hohen Schmelzpunkt enthalten.

Es war daher vor allem eine Aufgabe der Erfindung technisch vorteilhafte und leicht herstellbare Farbstoff-Präparationen zu finden.

Die lösung dieser Aufgabe bot sich in der Verwendung neuer Farbstoff-Präparationen an bei denen es sich um Farbstoff-Schmelzen handelt.

Die erfindungsgemässen Farbstoff-Schmelzen sind dadurch gekennzeichnet, dass sie auf 1 Teil eines in Wasser schwer bis unlöslichen Farbstoffes, dessen Schmelzpunkt über 150°C liegt, 2 bis weniger als 5 Teile eines nichtionischen Tensides mit einem Schmelzpunkt von 25° bis 100°C und einem HLB-Wert von 13 bis 19 oder eines kationischen Tensides mit einem Schmelzpunkt von 25° bis 100°C oder einer Mischung der genannten Tenside enthalten.

Diese erfindungsgemässen neuen Farbstoff-Schmelzen bieten erhebliche Vorteile. So kann vor allem auf das aufwendige Mahlen der Farbstoffe verzichtet werden und es gibt auch keine Probleme mehr mit der Dispersionsstabilität. Bei Einsatz dieser Farbstoff-Schmelzen in Färbeverfahren werden zudem egale Färbungen mit einem hohen Ausziehgrad erreicht.

Bei den erfindungsgemäss verwendbaren, in Wasser schwer bis unlöslichen Farbstoffen mit einem Schmelzpunkt über 150°C handelt es sich vor allem um Dispersionsfarbstoffe, die den verschiedensten Farbstoffklassen angehören können. Es handelt sich z.B. um Azo-, Anthrachinon-, Nitro-, Methin-, Styryl-, Azostyryl-, Perinon-, Chinophthalon-, Acridon- oder Naphthochinonimin-Farbstoffe, die frei von wasserlöslichmachenden Gruppen sind. Bevorzugte Dispersionsfarbstoffe sind metallfreie Mono- oder Disazofarbstoffe, Nitrofarbstoffe, Acridonfarbstoffe, Anthrachinonfarbstoffe oder Chinophthalonfarbstoffe.

Als nichtionische Tenside kommen solche in Frage, die einen Schmelzpunkt von 25 bis 100°C und einen HLB-Wert von 13 bis 19 aufweisen. Der HLB-Wert (Hydrophile-Lipophile-Balance) ist eine empirische Zahl zur Charakterisierung der Hydrophilie bzw. Lipophilie von nichtionischen Tensiden. Als derartige Tenside kommen beispielsweise Umsetzungsprodukte von Ethylenoxid und/oder Propylenoxid in Frage mit:

a) einem niedermolekularen, aliphatischen Polyol, oder
b) einem gesättigten und/oder ungesättigten Fettalkohol mit 8 bis 22 C-Atomen, oder
c) einem Alkylphenol mit 4 bis 12 C-Atomen im Alkylrest, oder
d) einem Hydroxybiphenyl, oder
e) einem gesättigten und/oder ungesättigten Fettamin mit 8 bis 22 C-Atomen, oder
f) einer gesättigten und/oder ungesättigten Fettsäure mit 8 bis 22 C-Atomen, oder
g) einem gesättigten und/oder ungesättigten Fettsäure-(N,N-bis-hydroxyalkyl)amid

wobei auf 1 Mol der unter a) bis g) genannten Verbindungen vorzugsweise 5 bis 100 Mol Ethylenoxid und/oder Propylenoxid kommen.

Als bevorzugte Produkte sind im einzelnen genannt: Alkylpolyglykolether wie $C_{16}$-$C_{18}$-Alkoholethoxylat mit etwa 25 Mol Ethylenoxyd, Cetyloleylethoxylat mit etwa 19 Mol Ethylenoxid und $C_{16}$-$C_{18}$-Alkylethoxylat mit etwa 50 Mol Ethylenoxyd; ferner Mono-, Di- und Trialkylarylpolyglykolether wie Tributylphenol-ethoxylat mit etwa 13 Mol bzw. etwa 18 Mol Ethylenoxyd, Nonylphenolethoxylat mit etwa 30 Mol Ethylenoxyd, Di-$C_9$-$C_{12}$-alkylphenolethoxylat mit etwa 49 Mol Ethylenoxyd und Dinonylphenolethoxylat mit etwa 18 Mol Ethylenoxyd.

Es können aber auch Gemische dieser Umsetzungsprodukte untereinander verwendet werden. Diese Gemische erhält man durch Mischen einzelner Umsetzungsprodukte oder direkt durch Ethoxylierung eines Gemisches der den Umsetzungsprodukten zugrundeliegende Verbindungen.

Als kationische Tenside mit einem Schmelzpunkt von 25° bis 100°C kommen in erster Linie einen Alkylrest aufweisende quartäre Ammoniumverbindungen der Formel

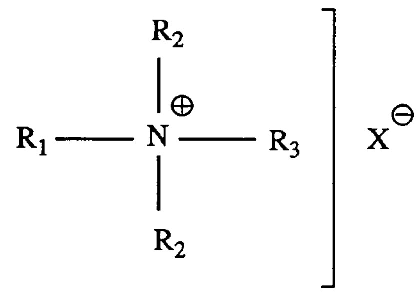

in Frage, worin die Substituenten $R_1$ bis $R_3$ und das Symbol $X^\ominus$ die folgende Bedeutung haben:
$R_1$ ein gesättigter oder ungesättigter Alkylrest mit 8 bis 22 Kohlenstoffatomen;
$R_2$ unabhängig voneinander jeweils ein Alkylrest mit 1 bis 4 Kohlenstoffatomen oder eine Polyalkylenoxidkette mit 3 bis 30 Ethylenoxid- und/oder Propylenoxideinheiten oder Ethylenoxid- und Styroloxideinheiten;
$R_3$ ein gegebenenfalls durch eine Hydroxy-, Methoxy- oder Ethoxygruppe oder durch einen Carbamoyl- oder Phenylrest substituierter Alkylrest mit 1 bis 4 Kohlenstoffatomen;
$X^\ominus$ das Anion einer organischen oder anorganischen Säure, wie z.B. Acetat, Chlorid, Bromid, Sulfat oder Methosulfat.

Derartige Verbindungen sind bekannt oder nach bekannten Verfahren zugänglich, beispielsweise durch Umsetzen eines Fettamins oder einer Mischung von Fettaminen, wie beispielsweise Kokosfettamin mit Ethylenoxid und/oder Propylenoxid und anschliessendes Quaternieren des so erhaltenen Alkoxylats z.B. mit Dimethylsulfat (siehe z.B. H. Stache, Tensid-Taschenbuch; Carl Hanser Verlag 1981).

Als quartäre Fettaminalkoxylate sind beispielsweise die folgenden genannt:
Mit Chloracetamid quaterniertes Anlagerungsprodukt von etwa 8 Mol Ethylenoxid an 1 Mol Talgfettamin;
mit Dimethylsulfat quaterniertes Anlagerungsprodukt von etwa 30 Mol Ethylenoxid an 1 Mol eines $C_{18}$-$C_{22}$-Fettamins;
mit Dimethylsulfat quaterniertes Anlagerungsprodukt von etwa 30 Mol Ethylenoxid an 1 Mol Laurylamin;
mit Dimethylsulfat quaterniertes Anlagerungsprodukt von etwa 15 Mol Ethylenoxid an 1 Mol Laurylamin;
mit Dimethylsulfat quaterniertes Anlagerungsprodukt von etwa 15 Mol Ethylenoxid an 1 Mol Stearylamin;
mit Dimethylsulfat quaterniertes Anlagerungsprodukt von 1 Mol Styroloxid und etwa 30 Mol Ethylenoxid an 1 Mol Stearylamin;
mit Dimethylsulfat quaterniertes Anlagerungsprodukt von 6 Mol Propylenoxid und etwa 30 Mol Ethylenoxid an 1 Mol Caprylamin;
mit Dimethylsulfat quaterniertes Anlagerungsprodukt von 1 Mol Styroloxid und etwa 20 Mol Ethylenoxid an 1 Mol Stearylamin;

Des weiteren kommen $C_8$ bis $C_{22}$ Alkylpyridiniumsalze, vor allem Chloride und Bromide in Frage, wie beispielsweise Hexadecylpyridiniumchlorid. Auch Mischungen derartiger Verbindungen kommen in Frage, wobei die quartären Ammoniumverbindungen beispielsweise erhalten werden, wenn man bei der Herstellung dieser Tenside von Fettamingemischen, wie z.B. Kokosfettamin, ausgeht.

Bevorzugte Tenside sind die nichtionischen, vor allem die Alkylpolyglykolether und die Mono-, Di- oder Trialkylarylpolyglykolether.

Das Mischungsverhältnis (in Gewichtsteilen) von Farbstoff zu Tensid beträgt 1 zu 2 bis weniger als 5 und insbesondere 1 zu etwa 3.

Eine bevorzugte Schmelze besteht darin, dass sie auf 1 Teil eines Dispersionsfarbstoffes etwa 3 Teile eines nichtionischen Tensides, vor allem eines Alkylpolyglykolethers mit einem Schmelzpunkt von 25 bis 100°C und einem HLB-Wert von 13 bis 19 enthält.

Hergestellt werden die erfindungsgemässen pastösen bis festen Farbstoff-Schmelzen, indem man 1 Teil eines in Wasser schwer bis unlöslichen Farbstoffes, dessen Schmelzpunkt über 150°C liegt, mit 2 bis weniger als 5 Teilen eines nichtionischen Tensides mit einem Schmelzpunkt von 25 bis 100°C und einem HLB-Wert von 13 bis 19 oder eines kationischen Tensides mit einem Schmelzpunkt von 25 bis 100°C oder einer Mischung der genannten Tenside und gegebenenfalls mit einem Hilfslösungsmittel vermischt und schmilzt.

Die Farbstoffe können grundsätzlich ohne jede Nachbehandlung, d.h. direkt von der Synthese her, z.B. in Form des feuchten Presskuchens (Rohfarbstoffes), der Syntheselösung oder Synthesesuspension oder eines Farbstofföles eingesetzt werden.

Als Hilfslösungsmittel kommen vor allem aliphatische Ketone wie Aceton oder aliphatische Alkohole wie Methanol und Ethanol in Betracht, aber auch andere bekannte dipolare Lösungsmittel mit einem Siedepunkt gleich oder kleiner 100°C, wie Formamid, Acetonitril und Nitromethan. Das Hilfslösungsmittel wird in einer

Menge von 0 bis 1 l auf 1 g Farbstoff eingesetzt.

Das Verfahren besteht darin, dass man den definitionsgemässen Farbstoff mit dem definitionsgemässen Tensid in den genannten Mengen gegebenenfalls zusammen mit dem Hilfslösungsmittel vermischt und unter Rücckflussbedingungen, bei Temperaturen von 60- 180°C, bevorzugt 80- 130°C, erhitzt. Das Hilfslösungsmittel wird, sofern anwesend, anschliessend abdestilliert. Nach Erkalten erstarrt der Farbstoff mit dem Tensid zu einer pastösen bis festen Schmelze, die man gegebenenfalls grob zerkleinem kann. Die Schmelztemperatur liegt vorzugsweise bei 80° bis 90°C.

Die so erhaltene Schmelze, welche über mehrere Monate lagerstabil ist, kann dann unter Zugabe von warmem Wasser (ca. 60-80°C) und eventuellen Färbehilfsmitteln zu einem Farbstoff-Solubilisat verarbeitet werden, welches dann zum Färben und Bedrucken von hydrophoben Fasermaterialien verwendet werden kann.

Weiterhin kann man die erfindungsgemässen Farbstoff-Schmelzen auch direkt in das Färbebad geben bzw. kontinuierlich zudosieren.

Als Färbehilfsmittel, die vorteilhaft in kleinen Mengen angewendet werden, kommen z.B. in Frage: Säuren, insbesondere organische niedere Monocarbonsäuren, wie Ameisensäure oder Essigsäure; Puffersalze, wie Ammoniumsulfat oder Natriumacetat; Netzmittel; Emulgiermittel oder Antischaummittel.

Bei den nach vorliegendem Verfahren färbbaren hydrophoben Fasermaterialien handelt es sich in erster Linie um solche aus linearen hochmolekularen Estern aromatischer Polycarbonsäuren mit polyfunktionellen Alkoholen, beispielsweise aus Terephthalsäure und Ethylenglykol oder Dimethylolcyclohexan und Mischpolymere aus Terephthalsäure und Isophthalsäure und Ethylenglykol; genannt ist vor allem Polyesterfasermaterial. Diese Materialien können, sofern die hierfür geeigneten Apparaturen vorhanden sind, in beliebigen Verarbeitungsstadien, z.B. in Form von Flocken, Kammzug, Gam, texturierten Fäden, Gewebe oder Gewirke, vorliegen. Die Färbetemperatur für diese Materialien liegt vorzugsweise bei 120 bis 150°C für das HT-Verfahren und bis zu 100°C für das Carrier-Verfahren.

Ferner kann nach dem erfindungsgemässen Verfahren Polyamidmaterial gefärbt werden, z.B. Polyamid-6, Polyamid-6,6 oder auch Polyamid 12. Die Färbetemperatur beträgt für diese Materialien vorzugsweise 98 bis 100°C.

Das Flottenverhältnis liegt üblicherweise bei 1:5 bis 1:50; die Färbezeit beträgt 5 bis 60 Minuten.

Die folgenden Beispiele dienen der Veranschaulichung der Erfindung; Teile bedeuten Gewichtsteile und Prozente Gewichtsprozente.

Beispiele 1-14: (Herstellung der Farbstoff-Schmelzen)

Rohfarbstoff und Tensid (gemäss folgender Tabelle 1) werden gegebenenfalls in einem Hilfslösemittel vermischt und gelöst. Die Mischung wird in einem Rotationsverdampfer auf 90°C erhitzt, wodurch das Hilfslösemittel - sofern anwesend - abdestilliert und das Farbstoff-Tensid-Gemisch schmilzt.

Man erhält so eine pastöse bis feste Farbstoff-Schmelze.

Tabelle 1:

| Bsp. | Farbstoff der Formel/Menge | Tensid Menge/HLB-Wert/Smp. °C | Hilfslösungsmittel/Menge |
|---|---|---|---|
| 1 | 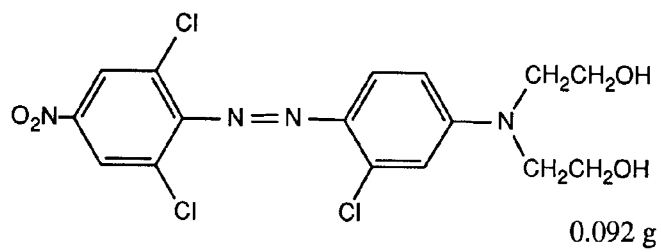 0.092 g | Dinonylphenolethoxylat mit 18 Mol Ethylenoxid 0.276 g / 16 /35-40° | Aceton/50 ml |
| 2 | 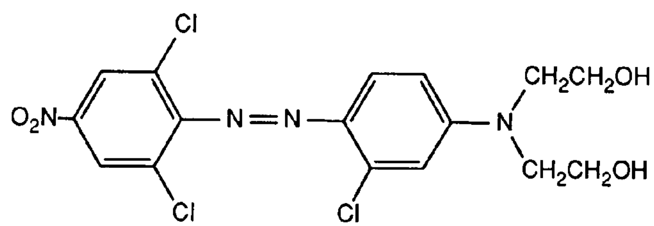 0.092 g | $C_{16}$-$C_{18}$-Alkylethoxylat mit 50 Mol Ethylenoxid 0.276 g / 18 / ca. 40° | Aceton/50 ml |
| 3 | 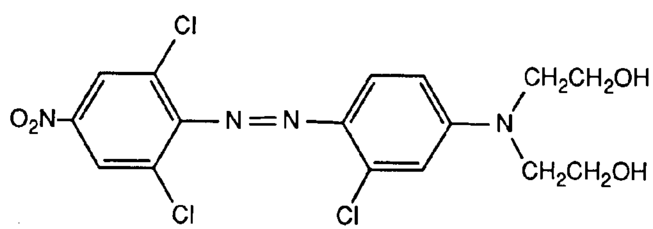 0.092 g | $C_{16}$-$C_{18}$-Alkylethoxylat mit 50 Mol Ethylenoxid 0.184 g/ 18 /ca. 40° | Aceton/50 ml |

Tabelle 1 (Fortsetzung):

| Bsp. | Farbstoff der Formel/Menge | Tensid Menge/HLB-Wert/Smp. °C | Hilfslösungs-mittel/Menge |
|---|---|---|---|
| 4 | 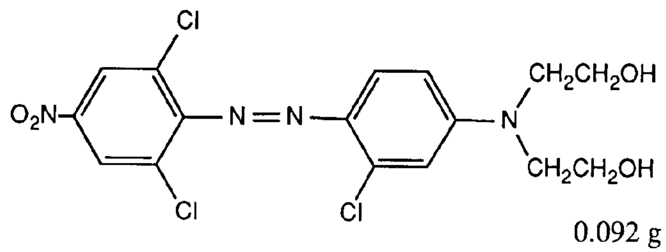 0.092 g | Cetyl-oleylethoxylat mit 19 Mol Ethylenoxid 0.276 g / 15.4 / ca. 36° | Aceton/50 ml |
| 5 | 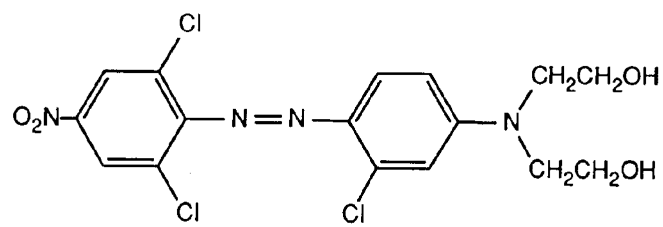 0.092 g | Cetyl-oleylethoxylat mit 19 Mol Ethylenoxid 0.276 g / 15.4 / ca. 36° | --- |
| 6 | 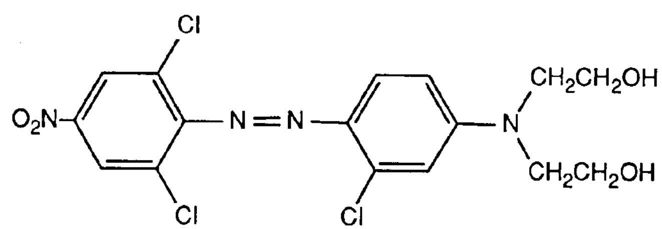 0.092 g | Hexadecylpyridinium-chlorid 0.184 g/ /ca. 78-82° | --- |

Tabelle 1 (Fortsetzung):

| Bsp. | Farbstoff der Formel/Menge | Tensid Menge/HLB-Wert/Smp. °C | Hilfslösungs-mittel/Menge |
|---|---|---|---|
| 7 | 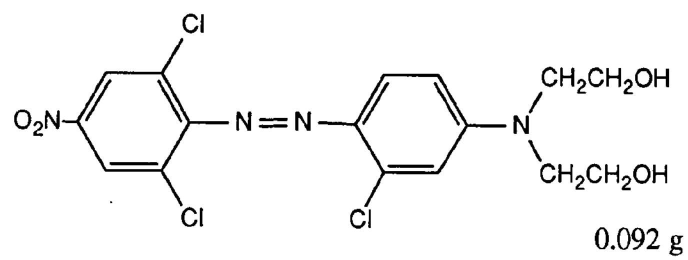 0.092 g | Di-$C_9$-$C_{12}$-alkylphenol-ethoxylat mit 49 Mol Ethylenoxid 0.276 g / 17.2 / ca. 40° | Aceton/50 ml |
| 8 | 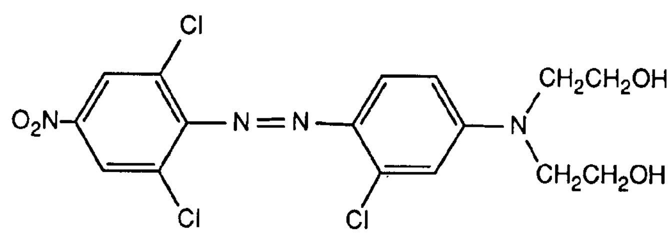 0.092 g | Hexadecylpyridinium-chlorid 0.276 g / - / ca. 78-82° | Aceton/50 ml |
| 9 | 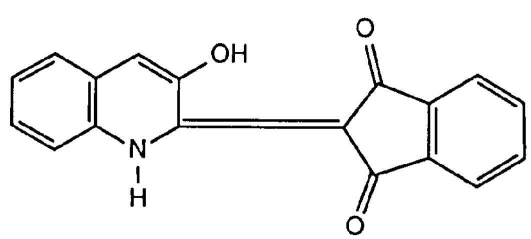 0.056 g | Di-$C_9$-$C_{12}$-alkylphenol-ethoxylat mit 49 Mol Ethylenoxid 0.168 g / 17.2 / ca. 40° | Aceton/50 ml |

Tabelle 1 (Fortsetzung):

| Bsp. | Farbstoff der Formel/Menge | Tensid Menge/HLB-Wert/Smp. °C | Hilfslösungs-mittel/Menge |
|---|---|---|---|
| 10 | 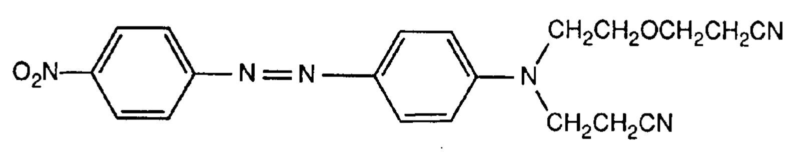 0.096 g | Di-$C_9$-$C_{12}$-alkylphenol-ethoxylat mit 49 Mol Ethylenoxid 0.288 g / 17.2 / ca. 40° | Aceton/50 ml |
| 11 | 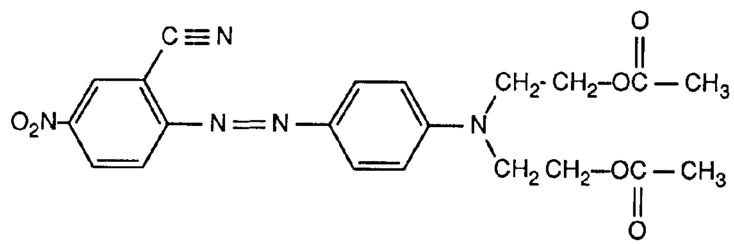 0.088 g | Di-$C_9$-$C_{12}$-alkylphenol-ethoxylat mit 49 Mol Ethylenoxid 0.264 g / 17.2 / ca. 40° | Aceton/50 ml |
| 12 | 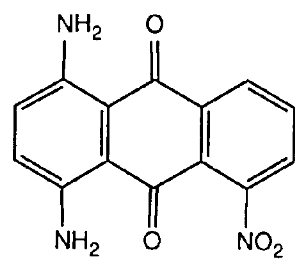 0.100 g | Di-$C_9$-$C_{12}$-alkylphenol-ethoxylat mit 49 Mol Ethylenoxid 0.300 g / 17.2 / ca. 40° | Aceton/50 ml |

Tabelle 1 (Fortsetzung):

| Bsp. | Farbstoff der Formel/Menge | Tensid Menge/HLB-Wert/Smp. °C | Hilfslösungs-mittel/Menge |
|---|---|---|---|
| 13 | 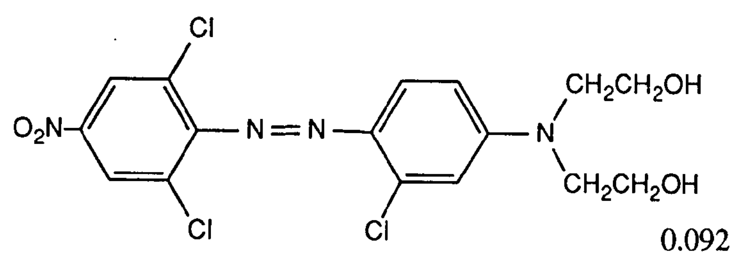 0.092 g | Dinonylphenolethoxylat mit 18 Mol Ethylenoxid 0.276 g / 16 / 35-40° | --- |
| 14 | 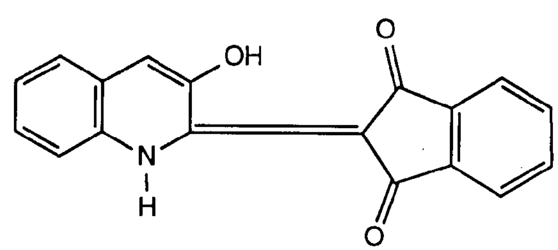 0.056 g | Di-$C_9$-$C_{12}$-alkylphenol-ethoxylat mit 49 Mol Ethylenoxid 0.252 g / 17.2 / ca. 40°C | Aceton / 50 ml |

Beispiele 15-28 (Färbeverfahren)

In einem Ansatzgefäss befindet sich die gemäss den Beispielen 1 bis 14 erhaltene Farbstoff-Schmelze. Diese wird mit 375 ml 70°C warmem Wasser und 0,75 g Ammoniumsulfat zu einem Farbstoff-Solubilisat verarbeitet. Zu dieser so erhaltenen Färbeflotte gibt man 30 g Tersuisse-Polyester-Tricot Typ 2032 und färbt nach einem für Dispersionsfarbstoffe üblichen HT-Temperatur-Programm, d.h. man erwähnt die Flotte mit dem Gewebe innerhalb von 15-45 min auf etwa 130°C und hält diese Temperatur während 20-60 min, worauf man das Gewebe entnimmt. Man erhält eine egale Polyester-Färbung, welche einen hohen Ausziehgrad besitzt (s. folgende Tabelle 2).

Tabelle 2:

| Bsp. | Farbstoff-Schmelze gemäss Bsp. | Färbung auf Polyester | Ausziehgrad |
|---|---|---|---|
| 15 | 1 | braun | >98.0% |
| 16 | 2 | braun | >90.0% |
| 17 | 3 | braun | >87.0% |
| 18 | 4 | braun | >88.2% |
| 19 | 5 | braun | >87.0% |
| 20 | 6 | braun | >90.0% |
| 21 | 7 | braun | >92.0% |
| 22 | 8 | braun | >88.0% |
| 23 | 9 | gelb | >99.0% |
| 24 | 10 | orange | >98.0% |
| 25 | 11 | rot | >97.0% |
| 26 | 12 | violett | >93.0% |
| 27 | 13 | braun | >99.0% |
| 28 | 14 | gelb | >97.0% |

**Patentansprüche**

1. Pastöse bis feste Farbstoff-Schmelze, dadurch gekennzeichnet, dass sie auf 1 Teil eines in Wasser schwer bis unlöslichen Farbstoffes, dessen Schmelzpunkt über 150°C liegt, 2 bis weniger als 5 Teile eines nichtionischen Tensides mit einem Schmelzpunkt von 25° bis 100°C und einem HLB-Wert von 13 bis 19 oder eines kationischen Tensides mit einem Schmelzpunkt von 25 bis 100°C oder einer Mischung der genannten Tenside enthält.

2. Pastöse bis feste Farbstoff-Schmelze gemäss Anspruch 1, dadurch gekennzeichnet, dass sie auf 1 Teil eines in Wasser schwer bis unlöslichen Farbstoffes, dessen Schmelzpunkt über 150°C liegt, etwa 3 Teile eines nichtionischen oder kationischen Tensides enthält.

3. Pastöse bis feste Farbstoff-Schmelze gemäss den Ansprüchen 1 oder 2, dadurch gekennzeichnet, dass sie ein nichtionisches Tensid enthält.

4. Pastöse bis feste Farbstoff-Schmelze gemäss Anspruch 3, dadurch gekennzeichnet, dass sie als nichtionisches Tensid einen Alkylpolyglykolether oder einen Mono-, Di- oder Trialkylarylpolyglykolether enthält.

5. Pastöse bis feste Farbstoff-Schmelze gemäss den Ansprüchen 1 oder 2, dadurch gekennzeichnet, dass sie ein kationisches Tensid enthält.

6. Pastöse bis feste Farbstoff-Schmelze gemäss Anspruch 5, dadurch gekennzeichnet, dass sie als kationisches Tensid eine quartäre Ammoniumverbindung enthält.

7. Pastöse bis feste Farbstoff-Schmelze gemäss den Ansprüchen 1 oder 2, dadurch gekennzeichnet, dass sie einen Dispersionsfarbstoff enthält.

8. Pastöse bis feste Farbstoff-Schmelze gemäss Anspruch 1, dadurch gekennzeichnet, dass sie auf 1 Teil eines Dispersionsfarbstoffes etwa 3 Teile eines nichtionischen Tensides mit einem Schmelzpunkt von 25 bis 100°C und einem HLB-Wert von 13 bis 19 enthält.

9. Verfahren zur Herstellung einer pastösen bis festen Farbstoff-Schmelze gemäss der Ansprüche 1 bis 8, dadurch gekennzeichnet, dass man 1 Teil eines in Wasser schwer bis unlöslichen Farbstoffes, dessen Schmelzpunkt über 150°C liegt, mit 2 bis weniger als 5 Teilen eines nichtionischen Tensides mit einem Schmelzpunkt von 25° bis 100°C und einem HLB-Wert von 13 bis 19 oder eines kationischen Tensides mit einem Schmelzpunkt von 25° bis 100°C oder Mischungen der genannten Tenside und gegebenenfalls mit einem Hilfslösungsmittel vermischt und schmilzt.

10. Verwendung der Farbstoff-Schmelzen gemäss Anspruch 1 zum Färben und Bedrucken von Textilmaterialien.

**Patentansprüche für folgenden Vertragsstaat: ES**

1. Verfahren zur Herstellung einer pastösen bis festen Farbstoff-Schmelze, dadurch gekennzeichnet, dass man 1 Teil eines in Wasser schwer bis unlöslichen Farbstoffes, dessen Schmelzpunkt über 150°C liegt, mit 2 bis weniger als 5 Teilen eines nichtionischen Tensides mit einem Schmelzpunkt von 25° bis 100°C und einem HLB-Wert von 13 bis 19 oder eines kationischen Tensides mit einem Schmelzpunkt von 25° bis 100°C oder Mischungen der genannten Tenside und gegebenenfalls mit einem Hilfslösungsmittel vermischt und schmilzt.

2. Verfahren gemäss Anspruch 1 zur Herstellung einer pastösen bis festen Farbstoff-Schmelze, dadurch gekennzeichnet, dass sie auf 1 Teil eines in Wasser schwer bis unlöslichen Farbstoffes, dessen Schmelzpunkt über 150°C liegt, etwa 3 Teile eines nichtionischen oder kationischen Tensides enthält.

3. Verfahren gemäss den Ansprüchen 1 oder 2 zur Herstellung einer pastösen bis festen Farbstoff-Schmelze, dadurch gekennzeichnet, dass sie ein nichtionisches Tensid enthält.

4. Verfahren gemäss Anspruch 3 zur Herstellung einer pastösen bis festen Farbstoff-Schmelze, dadurch gekennzeichnet, dass sie als nichtionisches Tensid einen Alkylpolyglykolether oder einen Mono-, Di- oder Trialkylarylpolyglykolether enthält.

5. Verfahren gemäss den Ansprüchen 1 oder 2 zur Herstellung einer pastösen bis festen Farbstoff-Schmelze, dadurch gekennzeichnet, dass sie ein kabonisches Tensid enthält.

6. Verfahren gemäss Anspruch 5 zur Herstellung einer pastösen bis festen Farbstoff-Schmelze, dadurch gekennzeichnet, dass sie als kationisches Tensid eine quartäre Ammoniumverbindung enthält.

7. Verfahren gemäss den Ansprüchen 1 oder 2 zur Herstellung einer pastösen bis festen Farbstoff-Schmelze, dadurch gekennzeichnet, dass sie einen Dispersionsfarbstoff enthält.

8. Verfahren gemäss Anspruch 1 zur Herstellung einer pastösen bis festen Farbstoff-Schmelze, dadurch gekennzeichnet, dass sie auf 1 Teil eines Dispersionsfarbstoffes etwa 3 Teile eines nichbonischen Tensides mit einem Schmelzpunkt von 25 bis 100°C und einem HLB-Wert von 13 bis 19 enthält.

9. Verwendung der gemäss Anspruch 1 erhältlichen Farbstoff-Schmelzen zum Färben und Bedrucken von Textilmaterialien.

Europäisches Patentamt

# EUROPÄISCHER RECHERCHENBERICHT

Nummer der Anmeldung

EP 91 81 0938

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 284 650 (BAYER) * Ansprüche 1,3-5; Seite 1, Zeile 11 - Seite 2, Zeile 2; Seite 3, Zeilen 14-32; Seite 4, Zeilen 31-35; Beispiele * | 1-4,7-10 | C 09 B 67/42 |
| A | DE-B-1 000 337 (FARBWERKE HOECHST) * Anspruch; Beispiele 3,17,18; Spalte 2, Zeile 26 - Spalte 3, Zeile 4 * | 1-4,7-10 | |
| A | FR-A-1 103 481 (COMPAGNIE FRANCAISE DES MATIERES COLORANTES) * Das ganze Dokument * | 1-4,7-10 | |
| A | FR-A-1 459 862 (G. CHRISTORY) * Das ganze Dokument * | 1-10 | |
| A | FR-A-1 351 918 (TOYO RAYON K.K.) * Zusammenfassung Punkte I.1,2,4-6; Beispiele; Seite 1, linke Spalte, Absatz 1; Seite 2, linke Spalte, Absatz 3 - rechte Spalte, Absatz 2; Seite 3, linke Spalte, Absatz 5 - rechte Spalte, letzte Zeile; Seite 7, linke Spalte, Zeile 1 - Seite 8, linke Spalte, Zeile 3 * | 1-4,7-10 | RECHERCHIERTE SACHGEBIETE (Int. Cl.5) C 09 B |
| A | DE-A-3 738 062 (CIBA-GEIGY) * Das ganze Dokument * | 1-10 | |

Der vorliegende Recherchenbericht wurde für alle Patentansprüche erstellt

| Recherchenort | Abschlußdatum der Recherche | Prüfer |
|---|---|---|
| DEN HAAG | 03-02-1992 | GINOUX C.R.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)